Europäisches Patentamt

(19) European Patent Office

Office européen des brevets

(11) Veröffentlichungsnummer: **0 023 279**

**A1**

(12) # EUROPÄISCHE PATENTANMELDUNG

(21) Anmeldenummer: **80103745.8**

(22) Anmeldetag: **01.07.80**

(51) Int. Cl.³: **G 02 F 1/01**
**G 02 F 1/19, F 21 K 2/00**

(30) Priorität: **25.07.79 DE 2930173**

(43) Veröffentlichungstag der Anmeldung:
**04.02.81 Patentblatt 81/5**

(84) Benannte Vertragsstaaten:
**AT BE FR GB IT NL**

(71) Anmelder: **SIEMENS AKTIENGESELLSCHAFT Berlin**
**und München**
**Postfach 22 02 61**
**D-8000 München 22(DE)**

(72) Erfinder: **Pape, Heinz, Dipl.-Phys.**
**Forstenrieder-Allee 17**
**D-8000 München 71(DE)**

(72) Erfinder: **Quella, Ferdinand, Dr.,**
**Parkstrasse 9**
**D-8035 Gauting(DE)**

(54) **Phosphoreszierende passive Displays.**

(57) Vorrichtung zur Verbesserung der Erkennbarkeit passiver Displays in der Dunkelheit mit phosphoreszierenden Substanzen (Ph), die insbesondere auf dem Hintergrund im Anzeigebereich aufgebracht sind, vor dem meist zwischen einem lichtundurchlässigen und einem transparenten Zustand geschaltet wird.

FIG 1

COMPLETE DOCUMENT

SIEMENS AKTIENGESELLSCHAFT      Unser Zeichen
Berlin und München      VPA
                                           79 P 7 1 0 4

## Phosphoreszierende passive Displays.

Die Erfindung betrifft eine Vorrichtung zur Verbesserung der Erkennbarkeit passiver Displays in der Dunkelheit. Unter passiven Displays sind optische Vorrichtungen zu verstehen, die zur Darstellung von Informationen dienen und selbst kein Licht erzeugen. Die Erkennbarkeit beruht auf der elektronisch steuerbaren Modulation des Umgebungslichtes. Bei schwacher oder fehlender Außenbeleuchtung sind sie deshalb nicht mehr ablesbar.

Wenn die Umgebungshelligkeit für die Erkennbarkeit der Anzeige nicht mehr ausreichte, wurde bisher der Display mit einer Zusatzbeleuchtung ausgerüstet. Diese Lichtquelle verbraucht in aller Regel Strom und stellt daher einen der wesentlichen Vorzüge einer passiven Anzeigevorrichtung, nämlich den extrem geringen Leistungsbedarf, in Frage.

Eine zweite Möglichkeit ist die Aufhellung der Anzeige mit Hilfe einer Lichtsammelvorrichtung (Fluoreszenz-

Wed 1 Plr/23. Juli 1979

aktivierter Display = FLAD), die Umgebungslicht großflächig sammelt und auf den Anzeigebereich konzentriert.
Dies geschieht mit Hilfe eines als Lichtfalle ausgebildeten Körpers, der aus einem transparenten Material
mit einem Brechungsindex $n > 1$ besteht, in dem sich
fluoreszierende Partikel befinden. Ist sehr wenig oder
gar kein Umgebungslicht vorhanden, so sind auch diese
Displays nicht mehr zu erkennen.

Der Erfindung liegt die Aufgabe zugrunde, die Erkennbarkeit passiver Displays vor allem in der Dunkelheit zu
verbessern. Diese Aufgabe wird dadurch gelöst, daß phosphoreszierende Partikel an geeigneten Stellen der
passiven Displays, insbesondere auf dem Hintergrund im
Anzeigebereich, vor dem meist zwischen einem lichtundurchlässigen und einem transparenten Zustand geschaltet
wird (Lichtventil), aufgebracht werden.

Die Erfindung ist auf alle optischen Vorrichtungen anwendbar, bei denen ein Lichtventil elektrisch geschaltet
wird. Darunter fallen z. B. flüssige oder feste elektrochrome Anzeigen, elektrische oder magnetische Dipole, die
mit Hilfe von elektrischen oder magnetischen Feldern ausgerichtet werden, Flüssigkristalle eventuell mit eingelagerten dichroitischen Farbstoffen und ferner ferroelektrische Keramiken. Bei flüssigen oder festen elektrochromen Schichten wirkt die vordere elektrochrome Schicht
als Lichtventil und der interne Reflektor ist phosphoreszierend ausgebildet. Bei den elektrischen und magnetischen Dipolen, sowie bei den Flüssigkristallanzeigen
wird durch die unterschiedliche Ausrichtung im äußeren
Feld die Lichtventilwirkung erzielt. In diesen Fällen ist
der Hintergrund phosphoreszierend ausgebildet.

Mit der Erfindung wird erreicht, daß die Erkennbarkeit
passiver Anzeigen bei Dunkelheit wesentlich erhöht wird, und zwar ohne die Verwendung einer stromverbrauchenden aktiven Beleuchtung.

Bekanntlich klingt die Phosphoreszenz nach einer Exponentialfunktion ab. Um eine gleichmäßige Neuanregung zu erzielen, besitzt der passive Display nach einer Weiterbildung der Erfindung einen Schalter, bei dessen Betätigung alle Anzeigesegmente so geschaltet werden, daß die phosphoreszierenden Partikel im Anzeigebereich vom Umgebungslicht erreicht werden können.

Bei elektrophoretischen Anzeigen müssen die geladenen Partikel, die im elektrischen Feld im allgemeinen durch eine gefärbte Flüssigkeit bewegt werden, phosporeszierend sein. Dies kann z. B. durch Dotierung der Partikelsubstanz erreicht werden.

Nach einer Weiterbildung der Erfindung ist das Lichtventil bzw. die lichtabsorbierende Flüssigkeit, in der sich phosphoreszierende Partikel bewegen, für Phosphoreszenzlicht undurchlässig, für das Anregungslicht hingegen durchlässig. Auf diese Weise wird erreicht, daß das Anregungslicht die Phosphoreszenz immer erreichen kann. Eine besondere Maßnahme zur Neuanregung ist dann nicht mehr erforderlich.

Nach einer weiteren Ausgestaltung der Erfindung ist das passive Display ein fluoreszenzaktiviertes Display, bei dem Pigmente, mit denen das Licht aus dem Fluoreszenzkörper ausgekoppelt wird, phosphoreszierend sind. Dadurch ist eine Anzeige realisierbar, die bei beliebigen Beleuchtungsverhältnissen gut erkennbar ist. Außerdem können auch die Pigmente, die den diffusen Reflektor an den Schmalseiten einer Fluoreszenzplatte bilden, phosphoreszierend sein. Wird der phosphoreszierende Stoff so gewählt, daß das Fluoreszenzlicht des Fluoreszenzkörpers langwelliger ist als das Anregungslicht für die Phosphoreszenz, so wirken die phosphoreszierenden Partikel wie ein weißer, diffuser Reflektor für den Fluoreszenzkörper. Die Funktionsweise des Fluoreszenzkörpers bleibt unbeeinträchtigt. Als Vorteil ergibt sich, daß die phosphoreszierenden Partikel bei geeigneter Ausführung des Displays dauernd durch Umgebungslicht angeregt werden können, und daß das Phosphoreszenzlicht zum Teil in die Platte hinein emittiert wird. Das Phosphoreszenzlicht sollte so langwellig sein, daß es von den fluoreszierenden Partikeln nicht absorbiert wird, so daß der Fluoreszenzkörper nur als Lichtleiter wirkt.

Nach einer Weiterbildung der Erfindung ist der Fluoreszenzkörper im Anzeigebereich transparent (z. B. erreichbar durch Zerstörung des Farbstoffes im Anzeigebereich oder getrennte Anfertigung dieses Bereiches). Das Anregungslicht für die Phosphoreszenz wird dabei nicht durch die fluoreszierenden Partikel im Fluoreszenzkörper absorbiert. Die Helligkeit des Fluoreszenzkörpers wird nicht beeinträchtigt.

Die Erfindung wird anhand der in den Figuren dargestellten Ausführungsbeispiele erläutert. Es zeigen:

Figur 1 ein fluoreszenzaktiviertes Display mit phosphoreszierenden Auskoppelstellen und

Figur 2 ein elektrochromes Display mit einem phosphoreszierenden internen Reflektor.

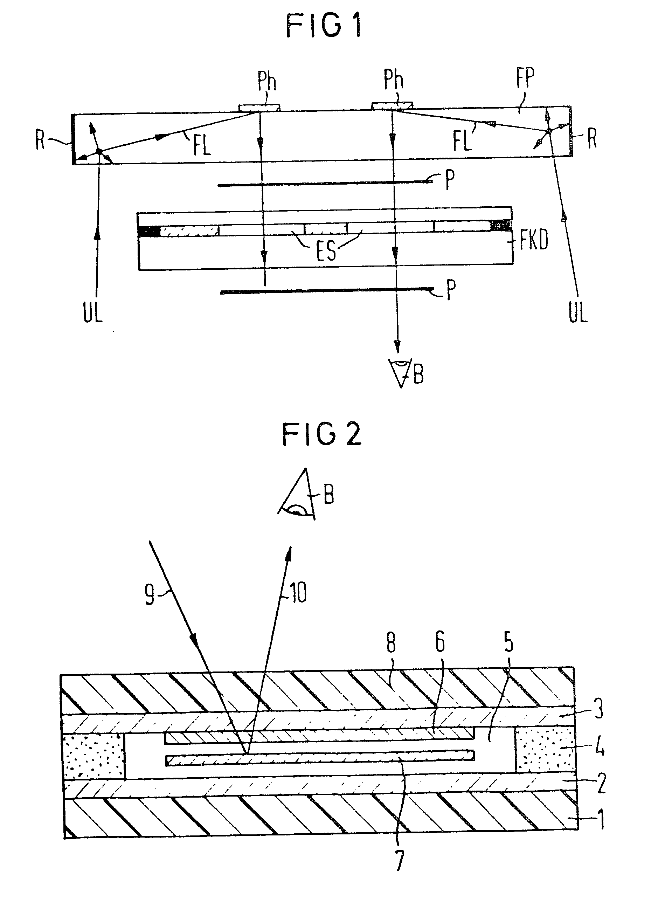

In der Figur 1 ist eine Fluoreszenzplatte FP dargestellt, die an ihren Schmalseiten jeweils mit einer Reflektionsschicht R versehen ist. Diese Reflektionsschicht kann auch eine diffus reflektierende phosphoreszierende Schicht sein. In dieser Figur ist der typische Weg eines im Anregungsspektrum der fluoreszierenden Partikel liegenden Lichtstrahls eingezeichnet. Das Umgebungslicht UL wird in der Fluoreszenzplatte FP von einem Farbstoffmolekül absorbiert und Fluoreszenzlicht FL emittiert.

Aufgrund der Totalreflektion und der Randverspiegelung R bleibt der größte Teil des Fluoreszenzlichtes in der Platte FP eingesperrt. Nur an den Stellen Ph, an denen phosphoreszierende Pigmente aufgebracht sind (z. B. durch Siebdruck), wird die Totalreflektion unterbrochen und das Fluoreszenzlicht in Richtung des Beobachters B aus der Platte ausgekoppelt. Zwischen Fluoreszenzplatte P und Beobachter B befindet sich eine übliche LCD-Anzeige, bestehend aus zwei Polarisatoren P und dem Flüssigkristalldisplay FKD mit den Elektrodensegmenten ES, die geometrisch auf die Auskoppelstellen Ph abgestimmt sind.

In der Figur 2 ist eine Flüssig-Elektrochrome-Anzeige mit phosphoreszierendem inneren Reflektor gezeigt. Auf einer Trägerschicht 1 befindet sich eine Rückelektrode 2. Zusammen mit einer transparenten Vorderelektrode 3 und einer Versiegelung 4 bilden diese ein abgeschlossenes Gefäß für einen flüssigen Elektrolyten 5. An der Unterseite der Vorderelektrode 3 befindet sich eine elektro-chrome Schicht (z. B. $WO_3$) 6, die eine phosphoreszierende Schicht 7 abdeckt. Die Vorderelektrode 3 ist auf einem transparenten Träger 8 aufgebracht. Mit einem Pfeil 9 ist das einfallende Licht bezeichnet und mit 10 das zum Betrachter B reflektierte Licht oder phosphoreszierende Licht.

Elektrische Zuleitungen, die zum Verständnis der Erfindung nicht unbedingt erforderlich sind, wurden in beiden Figuren weggelassen.

Die Erfindung ist nicht auf die beschriebenen und dargestellten Beispiele beschränkt. So kann das Prinzip insbesondere jeder Formgebung angepaßt und zur passiven Beleuchtung von Lichtventilen jeder Art (z. B. auch
mechanische) verwendet werden.


6 Patentansprüche
2 Figuren

0023279

Patentansprüche.

1. Vorrichtung zur Verbesserung der Erkennbarkeit passiver Displays, in der Dunkelheit, d a d u r c h g e - k e n n z e i c h n e t , daß phosphoreszierende Partikel (Ph) an geeigneten Stellen der passiven Displays, insbesondere auf dem Hintergrund im Anzeigebereich, vor dem meist zwischen einem lichtundurchlässigen und einem transparenten Zustand geschaltet wird (Lichtventil), aufgebracht sind.

2. Vorrichtung nach Anspruch 1, d a d u r c h g e - k e n n z e i c h n e t , daß das passive Display einen Schalter besitzt, bei dessen Betätigung alle Anzeigesegmente so geschaltet werden, daß die phosphoreszierenden Partikel im Anzeigebereich vom Umgebungslicht erreicht werden können.

3. Vorrichtung nach den Ansprüchen 1 und 2, d a - d u r c h g e k e n n z e i c h n e t , daß das passive Display ein elektrophoretisches Display ist, bei dem bekanntlich die geladenen Partikel, die im elektrischen Feld im allgemeinen durch eine gefärbte Flüssigkeit bewegt werden, phosphoreszierend sind (z. B. durch Dotierung).

4. Vorrichtung nach den Ansprüchen 1 und 3, d a - d u r c h g e k e n n z e i c h n e t , daß das Lichtventil bzw. die lichtabsorbierende Flüssigkeit, in der sich phosphoreszierende Partikel bewegen, für Phosphoreszenzlicht undurchlässig, für das Anregungslicht hingegen durchlässig ist.

5. Vorrichtung nach Anspruch 1, d a d u r c h g e - k e n n z e i c h n e t , daß das passive Display ein fluoreszenzaktiviertes Display ist, bei dem Pigmente, mit denen das Licht aus dem Fluoreszenzkörper ausgekoppelt wird, phosphoreszierend sind und eventuell auch
diejenigen, die den diffusen Reflektor bilden.

6. Vorrichtung nach Anspruch 5, d a d u r c h   g e -
k e n n z e i c h n e t ,   daß der Fluoreszenzkörper
im Anzeigebereich transparent ist.

FIG 1

FIG 2

0023279

Europäisches
Patentamt

**EUROPÄISCHER RECHERCHENBERICHT**

Nummer der Anmeldung

EP 80 10 3745

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 950 078 (N.C. ZATSKY) <br> * Ansprüche 1-5; Figuren 2,3 * <br><br> -- | 1 |
| X | GB - A - 2 007 900 (FAIRCHILD) <br> * Anspruch 1 * <br><br> -- | 1,5 |
| X | DE - B - 2 436 658 (SIEMENS) <br> * Spalte 4, Zeilen 32-35 * <br><br> -- | 1,5 |
| X | DE - A - 2 221 441 (B. VON GRABE) <br> * Ansprüche 1,2 * <br><br> -- | 1,5 |
| X | FR - A - 2 334 163 (SIEMENS) <br> * Seite 10, Zeile 21 - Seite 11, Zeile 9; Seite 12, Zeilen 1-14; Ansprüche 1-5,14,15; Figuren 3,6,7,9 * <br><br> -- | 1,5,6 |
|  | US - A - 3 844 637 (J.V. MASI) <br> * Spalte 2, Zeilen 24-65; Spalte 3, Zeile 41 - Spalte 4, Zeile 22 * <br><br> -- | 1,4 |
|  | FR - A - 2 051 099 (MATSUSHITA ELECTRIC) <br> * Seite 2, Zeilen 1-13; Seite 3, Zeile 32 - Seite 5, Zeile 28 * <br><br> ---- | 1,3,4 |

**KLASSIFIKATION DER ANMELDUNG (Int Cl.³)**

G 02 F 1/01
1/19
F 21 K 2/00

**RECHERCHIERTE SACHGEBIETE (Int Cl.³)**

G 02 F 1/01
1/133
1/17
1/19
G 04 G 9/00
F 21 K 2/00

**KATEGORIE DER GENANNTEN DOKUMENTE**

X. von besonderer Bedeutung

A. technologischer Hintergrund

O. nichtschriftliche Offenbarung

P. Zwischenliteratur

T der Erfindung zugrunde liegende Theorien oder Grundsätze

E kollidierende Anmeldung

D in der Anmeldung angeführtes Dokument

L. aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-11-1980 | BORMS |

EPA form 1503.1 06.78